# EUROPÄISCHE PATENTSCHRIFT

(11) **EP 3 717 430 B1**
(45) Veröffentlichungstag und Bekanntmachung des Hinweises auf die Patenterteilung: **27.10.2021**
(21) Anmeldenummer: 18800152.3
(22) Anmeldetag: 09.11.2018
(51) Int. Cl.: C03C 17/00, C03C 17/22

(54) **VERFAHREN ZUR HERSTELLUNG EINER BEDRUCKTEN BESCHICHTETEN SCHEIBE**
METHOD FOR PRODUCING A PRINTED AND COATED GLASS PANE
PROCÉDÉ DE FABRICATION D'UNE VITRE IMPRIMÉE ET REVÊTUE

(30) Priorität: 30.11.2017 EP 17204639
(43) Veröffentlichungstag der Anmeldung: 07.10.2020
(73) Patentinhaber: SAINT-GOBAIN GLASS FRANCE, 92400 Courbevoie (FR)
(72) Erfinder: KUSTER, Hans-Werner, 52066 Aachen (DE); YEH, Li-Ya, 52511 Geilenkirchen (DE); JANZYK, Sebastian, 52134 Herzogenrath (DE)
(74) Vertreter: Gebauer, Dieter Edmund
(86) Internationale Anmeldenummer: PCT/EP2018/080704
(87) Internationale Veröffentlichungsnummer: WO 2019/105712

(56) Entgegenhaltungen:
- WO-A1-2011/090784
- WO-A1-2015/019022
- WO-A2-2014/133929
- FR-A1- 2 843 913
- US-A1- 2004 086 652

## Beschreibung

Die Erfindung betrifft ein Verfahren zur Herstellung einer bedruckten, beschichteten Glasscheibe und eine Vorrichtung zur Durchführung des Verfahrens.

Aktuell gewinnt Glas als Baustoff zunehmend an Bedeutung. Architekten gestalten teilweise komplette Fassaden aus Glaselementen. Um nicht nur ästhetisch hochwertige sondern auch gleichzeitig energetisch günstige Gebäude zu realisieren, werden beschichtete Glassubstrate eingesetzt, die zum Beispiel die Sonneneinstrahlung reduzieren und so Kosten für die Klimatisierung senken.

Es sind viele verschiedene Beschichtungen bekannt. So gibt es Gläser mit antireflektierenden Beschichtungen, thermisch verbessernde Beschichtungen (Low-E, Sonnenschutz) oder beheizbare Schichten. Viele dieser Beschichtungen sind mechanisch nicht sehr stabil und insbesondere kratzempfindlich und korrosionsanfällig. Besonders silberbasierte Schichten sind in dieser Hinsicht sehr empfindlich.

Bei der Herstellung derartiger Glaselemente für den Architekturbereich durchlaufen die Glassubstrate verschiedene Prozessschritte. Auf ein meist klares Floatglas wird in der Regel eine Beschichtung aufgebracht, die in vielen Fällen aus mehreren dünnen Schichten besteht. Nach der Beschichtung muss das Glas noch einen Vorspannprozess durchlaufen. Dazu wird es Temperaturen über 600°C ausgesetzt. Allerdings findet dieser Vorspannprozess in der Regel nicht sofort statt. Das beschichtete Glas muss daher für einige Wochen bis Monate lagerfähig sein und auch einen Transport an eine andere Verarbeitungsstätte überstehen können.

Um das beschichtete Glas zu schützen gibt es verschiedene Ansätze. Eine Variante ist eine wiederabziehbare Folie, die die Beschichtung während der Lagerung schützt und die vor dem Vorspannen wieder abgezogen werden kann. Eine andere Lösung ist eine polymere Schutzschicht, die mit Wasser wieder abgewaschen werden kann, wie in der DE102014112822A1 beschrieben ist. Eine weitere Lösung ist eine polymere Schutzschicht, die während des Vorspannens bei den dabei anwesenden hohen Temperaturen rückstandslos entfernt wird. Die letzte Lösung wird in der US2016194516A1 beschrieben.

Im Bauglasbereich werden immer häufiger auch Scheiben verbaut mit Aufdrucken verschiedenster Art. Beispielsweise werden Gläser mit schwarzen Aufdrucken im Randbereich, die Befestigungselemente oder Sensoren verdecken, vermehrt verbaut. Die Farbe ist typischerweise eine keramische Farbe, die zur Fixierung während des Vorspannprozesses eingebrannt wird. Die Kombination eines Aufdrucks mit einer Beschichtung ist eine Herausforderung. Bei einem direkten Druck auf einer metallhaltigen Beschichtung kommt es nämlich nach dem Einbrennen zu störenden optischen Effekten.

In der WO2014/133929 wird ein Verfahren beschrieben, bei dem eine Farbe direkt auf einer metallhaltigen Beschichtung verwendet wird. Nachteil dieses Verfahrens ist, dass diese Farbe nicht auf einer polymeren Schutzschicht verwendet werden kann, die die metallhaltige Beschichtung schützt. Die metallhaltige Beschichtung wäre demnach ungeschützt während Lagerung und Transport zum Drucker, der sich oft an einer anderen Produktionsstätte oder in einem anderen Betrieb befindet als die Beschichtungsanlagen. Zum Schutz der metallhaltigen Beschichtung müsste eine abziehbare Folie eingesetzt werden, die in einem separaten Verfahrensschritt vor dem Bedrucken und vor dem Vorspannen entfernt werden müsste.

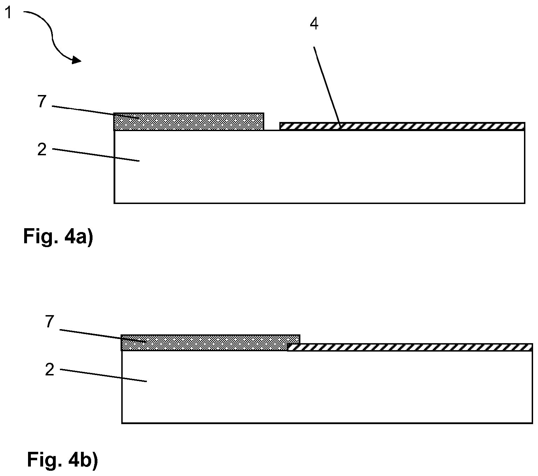

Will man die polymere Schutzschicht mit einem Druckvorgang kombinieren, müssen die polymere Schutzschicht und die metallhaltige Beschichtung im zu bedruckenden Bereich entfernt werden. Eine Möglichkeit ist die mechanische Entfernung der Schutzschicht und der metallhaltigen Beschichtung. Anschließend kann dann in dem entschichteten Bereich die Bedruckung vorgenommen werden, während gleichzeitig im übrigen Bereich die metallhaltige Beschichtung weiterhin durch eine polymere Schutzschicht geschützt ist. Während der mechanischen Entfernung der Beschichtung mit einer geeigneten Schleifscheibe kommt es im entschichteten Bereich allerdings zu kleinen Kratzern und Beschädigungen. Diese sind insbesondere nach dem Vorspannprozess trotz der Bedruckung deutlich sichtbar und mindern das optische Erscheinungsbild. Bei dem abrasiven Abtrag ist eine rückstandslose Entfernung nicht immer gegeben. Ein weiteres Problem bei der Methode ist, dass eine exakte Positionierung des Aufdrucks an der Kante zum beschichteten Bereich notwendig ist. Ansonsten kommt es an der Grenze zwischen Druck und Beschichtung zu optischen Fehlern: Wenn der Druck zu weit von der Beschichtung entfernt ist, entsteht ein Bereich ohne Beschichtung, der heller erscheint als der Rest der Scheibe (siehe Figur 4a). Wenn der Druck über der metallhaltige Beschichtung angebracht ist, gibt es optische Fehler im überdruckten Bereich (siehe Figur 4b). Die mechanische Entfernung liefert hier keine ausreichend scharfe Grenzlinie zwischen entschichtetem und beschichtetem Bereich. Die anschließende exakte Ausrichtung des Drucks an dieser Kante ist daher zu ungenau und die oben beschriebenen optischen Fehler treten auf.

Aufgabe der vorliegenden Erfindung ist die Bereitstellung eines verbesserten Verfahrens zur Herstellung einer beschichteten und bedruckten Glasscheibe und die Bereitstellung einer Vorrichtung zur Durchführung des Verfahrens.

Die Aufgabe wird erfindungsgemäß durch ein Verfahren nach dem unabhängigen Anspruch 1 gelöst. Bevorzugte Ausführungsformen gehen aus den Unteransprüchen hervor.

Das Verfahren zur Herstellung einer beschichteten und bedruckten Glasscheibe ist in den Ansprüche 1-8 beschrieben und unter anderem umfasst mindestens die folgenden Schritte in der angegebenen Reihenfolge:
a) Bereitstellen eines Glassubstrats mit einer metallhaltigen Beschichtung auf mindestens einer ersten Oberfläche und einer auf dieser metallhaltigen Beschichtung angeordneten polymeren Schutzschicht,
b) Entfernen der polymeren Schutzschicht und der metallhaltigen Beschichtung nur in einem festgelegten Bereich,
c) Aufbringen einer keramischen Farbe nur in dem festgelegten Bereich.

In Schritt c) wird die keramische Farbe ausschließlich in dem festgelegten Bereich aufgebracht und nicht in dem mit der polymeren Schutzschicht versehenen Bereich. So werden unschöne Ergebnisse nach dem Einbrennen der Farbe vermieden.

Dabei wird Schritt b) mit einem Laser durchgeführt. Nach Schritt b) sind die polymere Schutzschicht und die metallhaltige Beschichtung außerhalb des festgelegten Bereichs noch intakt. Das bedeutet, dass in Schritt b) die polymere Schutzschicht und die metallhaltige Beschichtung außerhalb des festgelegten Bereichs nicht entfernt werden. Im gesamten festgelegten Bereich sind dagegen nach Schritt b) sowohl die polymere Schutzschicht als auch die metallhaltige Beschichtung entfernt. Das Bereitstellen eines Glassubstrats auf dessen erster Oberfläche eine metallhaltige Beschichtung und eine polymere Schutzschicht angeordnet wurden in Schritt a), kann in den folgenden zwei Verfahrensschritten erfolgen:
a1) Aufbringen einer metallhaltigen Beschichtung auf eine erste Oberfläche eines Glassubstrats und
a2) Aufbringen einer polymeren Schutzschicht auf die metallhaltige Beschichtung.

Das erfindungsgemäße Verfahren liefert somit eine Glasscheibe, die mindestens eine metallhaltige Beschichtung umfasst, die durch eine polymere Schutzschicht geschützt ist und die gleichzeitig einen keramischen Aufdruck enthält, der in einem entschichteten Bereich angebracht ist. Eine derartige Scheibe konnte nach dem Stand der Technik bisher nur durch die Anwendung eines Schleifmittels zur Entschichtung erhalten werden, wobei zwangsläufig kleine Kratzer im entschichteten Bereich entstehen. Die nach dem erfindungsgemäßen Verfahren hergestellte Scheibe weist dagegen keine Kratzer auf, da der Laser bei der Entschichtung keine störenden Beschädigungen verursacht. Zudem ist die Grenzlinie zwischen dem entschichteten (festgelegten) Bereich glatt und scharf ausgebildet, sodass eine Ausrichtung des anschließenden Farbauftrags in Schritt c) besser möglich ist und somit weniger Ausschuss aufgrund von optischen Fehlern an der Grenze zwischen Beschichtung und Druck produziert wird.

Das Glassubstrat ist bevorzugt ein klares oder gefärbtes Floatglas. Die Dicke des Glassubstrats liegt zwischen 2 mm und 20 mm, bevorzugt zwischen 4 mm und 10 mm. Übliche Dicken sind 2 mm, 3 mm, 4 mm, 5 mm, 6 mm, 8 mm, 10 mm, 12 mm, 15 mm und 19 mm.

Das Glassubstrat hat eine erste Oberfläche und eine gegenüberliegende zweite Oberfläche. Bevorzugt wurde nur die erste Oberfläche mit einer metallhaltigen Beschichtung versehen.

Alternativ bevorzugt wurden die erste Oberfläche und die zweite Oberfläche mit einer metallhaltigen Beschichtung versehen. In diesem Fall wurden bevorzugt beide Oberflächen mit einer polymeren Schutzschicht versehen.

Die Glasscheibe ist insbesondere als Fensterscheibe für Gebäudeverglasung vorgesehen.

Die metallhaltige Beschichtung im Sinne der vorliegenden Erfindung ist eine Beschichtung, die mindestens eine funktionelle Schicht enthaltend eine Metallverbindung umfasst. Die metallhaltige Beschichtung ist bevorzugt eine heizbare Beschichtung oder IR-reflektierende Beschichtung. Die metallhaltige Beschichtung kann eine einzelne funktionelle Schicht sein, ist aber typischerweise ein Mehrschichtsystem. Die Beschichtung umfasst mindestens eine funktionelle Schicht. Typischerweise umfasst die metallhaltige Beschichtung dielektrische Schichten und weitere Schichten, die als Entspiegelungsschichten, Blockerschichten oder Oberflächenanpassungsschichten die optischen, elektrischen und / oder mechanischen Eigenschaften der metallhaltigen Beschichtung optimieren. Die mindestens eine funktionelle Schicht kann ein Metall oder eine Metalllegierung oder ein Oxid enthalten. In einer bevorzugten Ausgestaltung enthält die mindestens eine funktionelle Schicht Silber. Der Silberanteil der funktionellen Schicht beträgt bevorzugt größer 50 % (Gewichtsprozent), besonders bevorzugt größer 90% (Gewichtsprozent). Die funktionelle Schicht besteht ganz besonders bevorzugt im Wesentlichen aus Silber, abgesehen von etwaigen Verunreinigungen oder Dotierungen. Die metallhaltige Beschichtung kann bevorzugt mehrere funktionelle Schichten enthalten, die durch dielektrische Schichten voneinander getrennt sind. Die metallhaltige Beschichtung enthält bevorzugt mindestens zwei, besonders bevorzugt zwei oder drei, funktionelle Schichten, insbesondere silberhaltige Schichten. Typische Materialien, die für die dielektrischen Schichten der leitfähigen Beschichtung gebräuchlich sind, sind beispielsweise Siliziumnitrid, Siliziumoxid, Zinkoxid, Zinn-Zink-Oxid und Aluminiumnitrid. Die metallhaltige Beschichtung ist typischerweise ein Dünnschichtstapel. Typische Dicken der Beschichtung betragen kleiner 1 µm. Typische Dicken der funktionellen Schichten liegen im Bereich von 5 nm bis 50 nm für silberhaltige Schichten. Geeignete Mehrschichtsysteme sind zum Beispiel in der US2011027554A1 und in der US20060257670A1 beschrieben. Geeignete beschichtete Glassubstrate werden von SAINT GOBAIN GLASS unter dem Namen COOL-LITE^{®} vertrieben, insbesondere COOL-LITE^{®} SKN und COOL LITE^{®} XTREME.

Die metallhaltige Beschichtung kann nach den bekannten Verfahren aufgebracht werden, wie zum Beispiel über Magnetronsputtern, chemische Gasphasenabscheidung (CVD), plasmaunterstützte CVD (PECVD), Pyrolyse, Sol-Gel-Verfahren oder nasschemische Verfahren. Bevorzugt wird die metallhaltige Beschichtung über Magnetronsputtern abgeschieden.

Die polymere Schutzschicht im Sinne der Erfindung hat bevorzugt eine Dicke von mindestens 1 µm, ist nicht wasserlöslich und wird aus einer Zusammensetzung hergestellt, die Meth(acrylate) enthält. Nicht wasserlöslich bedeutet, dass die Schutzschicht auch einen üblichen Waschvorgang der Scheibe übersteht. Die polymere Schutzschicht ist eine temporäre polymere Schutzschicht. Die Bezeichnung temporär gibt an, dass die Schutzschicht nur zum Schutz bei der Lagerung oder Transport der Glasscheibe angebracht ist. Geeignete Schutzschichten sind in der US2016194516A1 beschrieben. Die polymere Schutzschicht im Sinne der Erfindung ist nicht abziehbar ("peelable), sondern wird durch thermische Zersetzung entfernt.

Der festgelegte Bereich ist der Bereich, der für eine Bedruckung mit einer keramischen Farbe vorgesehen ist. Der festgelegte Bereich ist ein flächiger Bereich auf der Oberfläche des Glassubstrats. Die Größe, die äußere Form und die Position des festgelegten Bereichs sind frei wählbar.

Die keramische Farbe, auch Email genannt, wird während des Vorspannprozesses auf das Glas aufgeschmolzen und bildet eine feste Bindung mit der Glasmatrix. Als keramische Farbe können gewöhnliche Farbzusammensetzungen gewählt werden, wie sie aus dem Stand der Technik für Schwarzdrucke auf Glas bekannt sind. Üblicherweise enthält eine keramische Farbe als Komponenten Glasbildner (Siliciumdioxid und/oder Bariumoxid), Flussmittel, die die Schmelze beeinflussen (z.B. Na₂O, K₂O, Li₂O, CaO, MgO, SrO, BaO), und weitere Oxide wie Aluminiumoxid, Zinkoxid, Zirkoniumoxid. Zusätzlich werden anorganische Farbpigmente zur Farbgebung eingesetzt. Die Bestandteile können in einem Medium suspendiert sein, um den Druckvorgang zu ermöglichen. Hier kommen organische und/oder wässrige Lösungen in Frage. Die keramische Farbe kann im Siebdruckverfahren, Walzverfahren (auch Rollercoaterverfahren genannt) oder Digitaldruckverfahren aufgebracht werden. Bevorzugt werden opake keramische Farben eingesetzt.

In dem erfindungsgemäßen Verfahren wird nach den oben beschriebenen Schritten a) bis c) in einem weiteren Schritt d) die Glasscheibe einer Temperaturbehandlung bei >600 °C unterzogen. Dabei wird die temporäre polymere Schutzschicht auf der gesamten ersten Oberfläche entfernt und die keramische Farbe im festgelegten Bereich eingebrannt. Dank des erfindungsgemäßen Verfahrens wird so eine vorgespannte Glasscheibe mit einer metallhaltigen Beschichtung und einem Aufdruck in einem begrenzten entschichteten Bereich erhalten.

Das Verfahren kommt ohne separate Schritte für die Entfernung der polymeren Schutzschicht aus. Die polymere Schutzschicht zersetzt sich bei den hohen Temperaturen rückstandsfrei, sodass kein separater Abfall entsorgt werden muss. Gleichzeitig ist die metallhaltige Beschichtung während des Bedruckungsvorgangs durch die temporäre polymere Schutzschicht geschützt.

Dass bei Beginn der Temperaturbehandlung die polymere Schutzschicht vorhanden ist, hat einen überraschend positiven Effekt. Während der Temperaturbehandlung heizen sich der bedruckte Bereich und der beschichtete Bereich unterschiedlich stark auf. Abhängig von der Emissivität (ε = Emissionsgrad) heizt sich ein Körper auf. Die Emissivität eines Körpers gibt an, wie viel Strahlung er im Vergleich zu einem idealen Wärmestrahler, einem schwarzen Körper abgibt. Die Emissivität des idealen schwarzen Körpers ist 100%.

Der Bereich der Glasscheibe, der bedruckt ist (ε typischerweise zwischen 70% und 99%), heizt sich am stärksten auf (besonders bei einem Schwarzdruck). Die metallhaltige Beschichtung alleine hat eine sehr niedrige Emissivität (ε typischerweise zwischen 0,5 % und 4%), da sie Wärme reflektiert und sich somit wenig aufheizt. Ohne polymere Schutzschicht gäbe es somit einen großen Temperaturunterschied zwischen bedrucktem Bereich und dem Bereich mit metallhaltiger Beschichtung. Dies führt im Endprodukt zu optischen Fehlern, wie Wellenbildung im fertigen Produkt.

Dank der polymeren Schutzschicht (ε einer Glasscheibe mit metallhaltiger Beschichtung und polymerer Schutzschicht ist typischerweise größer als 40%) ist der Temperaturunterschied zwischen bedrucktem und beschichtetem Bereich kleiner. Somit erfolgt das Aufheizen der gesamten Glasscheibe gleichmäßiger als ohne die polymere Schutzschicht. Insbesondere der Unterschied beim Aufheizen zwischen dem bedruckten Bereich ohne metallhaltige Beschichtung und dem Bereich mit der metallhaltigen Beschichtung wird so verringert. Durch die gleichmäßigere Temperaturverteilung über die Glasoberfläche während der Temperaturbehandlung weist das Endprodukt weniger optische Fehler/Unregelmäßigkeiten auf. Zusätzlich sind im Vergleich zu einem Verfahren, bei dem auf die polymere Schutzschicht verzichtet wird, die Heizzeiten deutlich reduziert.

In einer bevorzugten Ausführungsform des erfindungsgemäßen Verfahrens wird die Glasscheibe bei der oben beschriebenen Temperaturbehandlung thermisch vorgespannt, wobei insbesondere Einscheibensicherheitsglas (ESG) oder teilvorgespanntes Glas (TVG) erhalten wird. Dabei wird nach dem Aufheizen der Glasscheibe auf Temperaturen über 600°C, bevorzugt 620°C bis 700°C, die Glasscheibe von den Oberflächen her rasch abgekühlt. Üblicherweise erfolgt das Abkühlen durch Anblasen mit Luft. Dabei erzeugt man im Inneren der Glasscheibe eine permanente Zugspannung und an den Oberflächen und an den Rändern eine permanente Druckspannung. Thermisch vorgespanntes Glas hat daher eine höhere mechanische Zerstörschwelle als nichtvorgespanntes Floatglas. Einscheibensicherheitsglas soll im Allgemeinen einen Vorspanngrad an der Oberfläche von mindestens 69 MPa aufweisen. Bei teilvorgespanntem Glas werden im Allgemeinen Oberflächendruckspannungen von 24-52 MPa erreicht.

In einer weiteren bevorzugten Ausführungsform des erfindungsgemäßen Verfahrens wird die keramische Farbe mit einem Roll-Coater oder einem Digitaldrucker aufgebracht. Der Auftrag im Walzverfahren mit einem Roll-Coater ist besonders vorteilhaft im Zusammenhang mit einer flächigen Randbedruckung. Dabei wird die Farbe mit einer gerillten Gummiwalze auf die Glasscheibe aufgetragen. Bei genauer Betrachtung ist die gerillte Struktur der Walze auf der Seite des Farbauftrags sichtbar. Beim Digitaldruckverfahren wird die keramische Farbe wie bei einem Tintenstrahldrucker auf die Glasoberfläche aufgebracht. Dieses Verfahren eignet sich besonders für komplexe oder mehrfarbige Designs oder Bilder.

In einer weiteren bevorzugten Ausführungsform des erfindungsgemäßen Verfahrens wird vor dem Aufbringen der keramischen Farbe der festgelegte Bereich einer Plasmareinigung unterzogen. Dabei werden eventuell vorhandene oberflächlich anhaftende Verschmutzungen entfernt. Gleichzeitig wird die Oberfläche optimal vorbereitet für den anschließenden Farbauftrag. Bevorzugt wird die Reinigung mit atmosphärischem Plasma, bei der das Glas sofort weiterverarbeitet werden kann.

Alternativ oder ergänzend zur Plasmareinigung kann die Scheibe vor der Bedruckung gewaschen und getrocknet werden. Übliche wässrige Waschlösungen oder reines Wasser können eingesetzt werden.

In einer weiteren bevorzugten Ausführungsform des erfindungsgemäßen Verfahrens erfolgt die Aufbringung der keramischen Farbe kameragesteuert im festgelegten Bereich, wobei die Kamera einen Unterschied zwischen dem entschichteten festgelegten Bereich und dem mit der polymeren Schutzschicht versehenen Bereich detektiert. Durch die Ausrichtung des Druckers mithilfe einer Kamera kann die Anzahl der Fehler bei der Bedruckung weiter reduziert werden. Insbesondere wird so vermieden, dass unbedruckte oder überdruckte Bereiche auftreten, die das optische Erscheinungsbild stören (siehe Figur 4).

In einer weiteren bevorzugten Ausführungsform des erfindungsgemäßen Verfahrens ist die Glasscheibe zwischen 1 m² und 54 m² groß. Für große Glasscheiben ist das erfindungsgemäße Verfahren von besonderem Vorteil, weil aufgrund der Anwesenheit der polymeren Schutzschicht während des Vorspannprozesses, ein gleichmäßigeres Aufheizen der Glasscheibe erfolgt und die Heizzeiten reduziert werden können. Bevorzugt ist die Glasscheibe zwischen 3 m² und 40 m² groß. Besonders bevorzugt hat die Glasscheibe eine Größe zwischen 10 m² und 30 m².

In dem erfindungsgemäßen Verfahren erstreckt sich der festgelegte Bereich entlang mindestens einer Kante der Glasscheibe und weist dabei, von der Scheibenkante gemessen, eine Breite b auf zwischen 0,5 cm und 30 cm, bevorzugt zwischen 1 cm und 20 cm, besonders bevorzugt zwischen 2 cm und 10 cm. Bevorzugt wird die Bedruckung entlang aller Kanten der Scheibe ausgeführt. Dies führt bei einer rechteckigen Scheibe zu einer rahmenartigen Bedruckung der Scheibe mit einem Abdeckdruck am Rand der Scheibe. Diese rahmenartige Bedruckung dient meist zur Abdeckung von Befestigungsmitteln der Scheibe. Bevorzugt hat der Rahmen entlang aller Scheibenkanten die gleiche Breite.

In einer weiteren bevorzugten Ausführungsform des erfindungsgemäßen Verfahrens ist die polymere Schutzschicht nicht wasserlöslich und wird aus einer Zusammensetzung hergestellt, die Meth(acrylate) enthält. Dadurch schützt die Schutzschicht besonders gut vor Nässe und bleibt auch während der üblichen Waschvorgänge intakt. Die polymere Schutzschicht wird durch Trocknen, IR- oder UV-Bestrahlung oder durch Elektronenstrahlvernetzung gehärtet bzw. vernetzt. Bevorzugt hat die polymere Schutzschicht eine Dicke von 1 µm bis 30 µm, bevorzugt 15 µm bis 20 µm. Bei diesen Dicken wird eine ausreichende Kratzfestigkeit erzielt, um während Lagerung und Transport die darunter liegende Schicht zu schützen.

Die Bezeichnung Meth(acrylate), bezieht sich auf Ester der Acrylsäure oder Methacrylsäure enthaltend mindestens eine Acryloyl (CH₂=CH—CO—) oder Methacryloyl (CH₂=CH(CH₃)—CO—)-Funktion. Diese Ester können Monomere, Oligomere, Prepolymere oder Polymere sein. Werden diese Meth(acrylate) unter Polymerisierungsbedingungen umgesetzt, erhält man ein Polymernetzwerk mit einer festen Struktur.

In einer weiteren bevorzugten Ausführungsform des erfindungsgemäßen Verfahrens hat die metallhaltige Beschichtung eine IR-reflektierende Funktion und enthält mindestens zwei silberhaltige Schichten und mindestens drei dielektrische Schichten. Die silberhaltigen Schichten bestehen aus Silber oder einer Silberverbindung. IR-reflektierend bedeutet, dass insbesondere der Teil des Sonnenspektrums im nichtsichtbaren Bereich zwischen 780 nm und 2500 nm zu einem großen Teil reflektiert wird. So wird bei Gebäudeverglasung oder Fahrzeugverglasung effektiv ein Aufheizen des Innenraums vermieden. Bevorzugt sind die mindestens zwei silberhaltigen Schichten und die mindestens drei dielektrischen Schichten so angeordnet, dass jede silberhaltige Schicht von zwei dielektrischen Schichten umgeben ist, die Schichten also abwechselnd angeordnet sind.

Ein weiterer Aspekt der Erfindung ist die Bereitstellung einer Vorrichtung zur Durchführung des erfindungsgemäßen Verfahrens. Die Vorrichtung umfasst mindestens einen Laserscanner und einen Roll-Coater oder einen Digitaldrucker. Da im Entschichtungsschritt ein Laser eingesetzt wird und kein mechanisches Schleifmittel, das zusätzlich Stäube erzeugt, ist es möglich, die Druckeinrichtung, das heißt Roll-Coater oder Digitaldrucker, in einer Vorrichtung mit dem Laser zu kombinieren. Die bei der Entschichtung mit dem Laser entstehenden Partikel können mit einer Absaugvorrichtung gegebenenfalls abgesaugt werden. In einer Vorrichtung bedeutet, dass die Bauteile in einer Produktionslinie angeordnet sind. Es ist möglich, dass die Vorgänge in verschiedenen Räumen stattfinden, wobei die einzelnen Arbeitsplätze jedoch über Transportbänder oder Transporteinrichtungen verbunden sind.

Bevorzugt findet die Laserbearbeitung unter Atmosphärenbedingungen statt. Ein Ausschluss von Sauerstoff ist nicht zwingend erforderlich. Durch die Anwesenheit der polymeren Schutzschicht ist die metallhaltige Beschichtung an den Grenzen des festgelegten Bereichs überraschenderweise ausreichend vor Korrosion geschützt. Ohne die Anwesenheit der temporären Schutzschicht würde die metallhaltige Beschichtung durch den anwesenden Sauerstoff und den hohen Energieeintrag durch den Laser oxidieren. Es ist somit überraschenderweise keine separate Kammer mit Schutzgasatmosphäre notwendig.

In einer weiteren bevorzugten Ausführungsform der erfindungsgemäßen Vorrichtung umfasst die Vorrichtung einen Laserscanner und einen Roll-Coater, die in einer Achse montiert sind. Diese Vorrichtung ermöglicht eine besonders genaue Ausrichtung des Roll-Coaters, was zu geringeren Fehlertoleranzen bei der Positionierung des Drucks führt.

Die erfindungsgemäße Vorrichtung umfasst zusätzlich eine Vorrichtung zur Plasmareinigung. Die Vorrichtung zur Erzeugung eines Plasmas ist in der Produktionslinie nach dem Laserscanner angeordnet und bereitet die Glasoberfläche für den nachfolgenden Farbauftrag vor. Das mit dieser Vorrichtung erhaltene Produkt weist einen noch besseren Druck auf und ist insbesondere vorteilhaft in Kombination mit komplexeren Aufdrucken, die zum Beispiel von einem Digitaldrucker erzeugt werden. Da die Dicke des von einem Digitaldrucker erzeugten Farbfilms dünner ist als die von einem Roll-Coater erzeugten Farbfilms, ist eine besonders gereinigte Oberfläche vorteilhaft.

Das Lasern erfolgt mittels mindestens eines 2D-Laserscanners. Diese Laserscanner sind senkrecht zur Oberfläche des beschichteten Glassubstrats angeordnet. Der 2D-Laserscanner verfügt über einen maximalen Arbeitsbereich von 3 m Breite und 18 m Länge. Der 2D-Laserscanner kann auf einer Achse montiert werden, so dass dieser im gesamten Arbeitsbereich entsprechend beweglich ist.

Als Laserquelle werden bevorzugt gepulste Festkörperlaser oder Faserlaser eingesetzt. Besonders bevorzugt wird ein Neodym-dotierter Yttrium-Aluminium-Granat-Laser (Nd:YAG-Laser) verwendet. Alternativ können auch Ytterbium (Yb:YAG-Laser) oder Erbium (Er:YAG-Laser) als Dotierungsmaterialien verwendet werden oder Titan: Saphir-Laser oder Neodymdotierte Yttrium-Vanadat-Laser (Nd:YV04-Laser) eingesetzt werden. Der Nd:YAG-Laser emittiert infrarote Strahlung einer Wellenlänge von 1064 nm. Durch Frequenzverdopplung bzw. Frequenzverdreifachung kann jedoch auch Strahlung der Wellenlängen 532 nm und 355 nm erzeugt werden.

Bei Verwendung eines 2D-Laserscanners trifft der von der Laserquelle erzeugte Laserstrahl auf einen Strahlaufweiter und wird von dort über einen Spiegel zum 2D-Laserscanner umgelenkt.

Das Lasern erfolgt mit einer Wellenlänge von 300 nm bis 1300 nm. Die eingesetzte Wellenlänge hängt dabei von der Art der Beschichtung ab. Der bevorzugt verwendete Nd:YAG-Laser kann Laserstrahlung der Wellenlängen 355 nm, 532 nm und 1064 nm bereitstellen. Für die Bearbeitung von Silberbeschichtungen wird bevorzugt eine Wellenlänge von 532 nm eingesetzt.

Das Lasern erfolgt bevorzugt mit einer Leistung von 1 W bis 150 W, besonders bevorzugt mit einer Leistung von 10 W bis 100 W.

### Kurzdarstellung der Zeichnungen

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
Fig. 1 eine Draufsicht auf eine Glasscheibe hergestellt nach einem erfindungsgemäßen Verfahren,
Fig. 2 ein Querschnitt durch den Randbereich einer Glasscheibe hergestellt nach dem erfindungsgemäßen Verfahren,
Fig. 3 eine schematische Darstellung eines erfindungsgemäßen Verfahrens und
Fig. 4 eine schematische Darstellung von Fehlern, die bei der Bedruckung von Glasscheiben auftreten können.

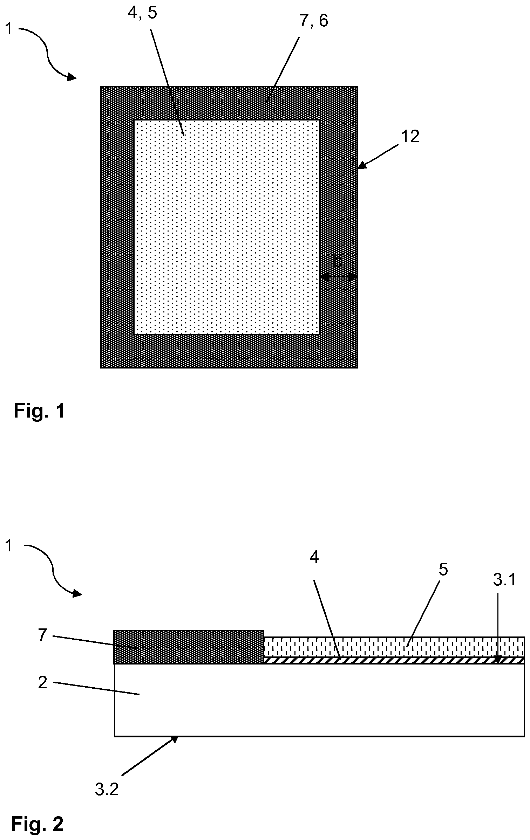

In Figur 1 ist eine Draufsicht auf eine erfindungsgemäße Glasscheibe 1 dargestellt und in Figur 2 ein Querschnitt durch einen Randbereich der Glasscheibe 1. Die Glasscheibe 1 ist eine 1 m x 1 m große Glasscheibe mit einer Dicke von 6 mm. Das Glassubstrat 1 ist ein klares Floatglas, wie es zum Beispiel von SAINT GOBAIN GLASS unter dem Namen PLANICLEAR® vertrieben wird. Auf der ersten Oberfläche 3.1 des Glassubstrats 2 ist eine silberhaltige IR-reflektierende Beschichtung 4 aufgetragen. Die Beschichtung 4 enthält zwei funktionelle Silberschichten, die alternierend mit 3 dielektrischen Schichten angeordnet sind. Die gesamte Dicke der metallhaltigen Beschichtung 4 liegt zwischen 150 nm und 200 nm. Auf der metallhaltigen Beschichtung 4 ist eine temporäre polymere Schutzschicht 5 angeordnet. Die polymere Schutzschicht ist aus einer Zusammensetzung hergestellt, die Meth(acrylate) enthält und wurde unter UV-Licht vernetzt. Die polymere Schutzschicht 5 hat eine Dicke von 15 µm. Eine geeignete polymere Schutzschicht wird von SAINT GOBAIN GLASS unter dem Namen EASYPRO^{®} angeboten. Im festgelegten Bereich 6 ist eine schwarze Keramikfarbe 7 angebracht. Der festgelegte Bereich 6 bildet einen Rahmen um die Glasscheibe 1 mit einer Breite b von 10 mm. Der Rahmen dient als Abdeckdruck, hinter dem die Befestigungsmaterialien und der Randverbund der fertigen Isolierglasscheibe verborgen werden.

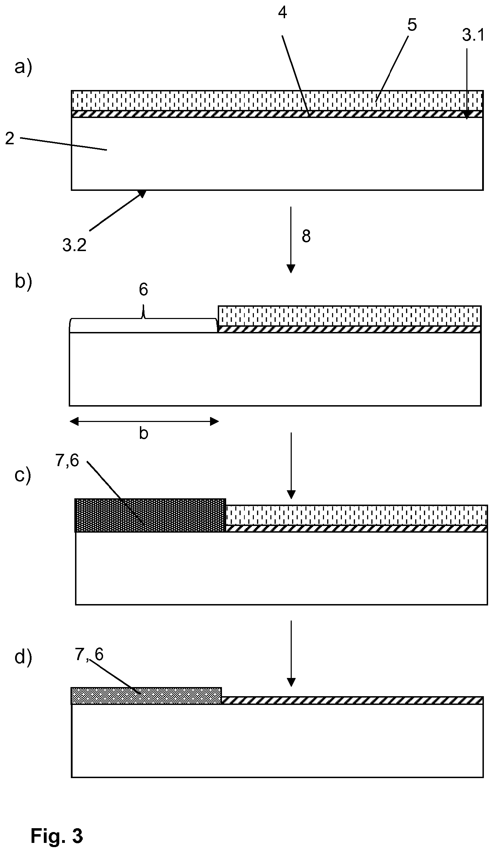

In Figur 3 ist eine schematische Darstellung des erfindungsgemäßen Verfahrens gezeigt. In Schritt a) geht man von einem 6 mm dicken Glassubstrat 2 aus mit einer insgesamt 200-250 nm dicken metallhaltigen Beschichtung 4 umfassend drei Silberschichten und vier dielektrische Schichten, wobei die metallhaltige Beschichtung 4 durch eine 15 µm dicke polymere Schutzschicht 5 abgedeckt ist. Die erste Oberfläche 3.1 des Glassubstrats 2 ist vollflächig mit den Schichten 4 und 5 versehen. In Schritt b) wird mit einem 2D Laserscanner der festgelegte Bereich 6 mit der Breite b= 20 mm entschichtet. Die Entschichtung findet unter Umgebungsbedingungen ohne Ausschluss von Sauerstoff statt. Im folgenden Schritt c) wird eine schwarze Keramikfarbe 7 im entschichteten Bereich 6 aufgetragen. Im letzten Schritt d) wird die Scheibe 1 einer Temperaturbehandlung bei 690°C für 8 Minuten unterzogen. Dabei wird die Scheibe 1 gleichzeitig vorgespannt, die polymere Schutzschicht 5 wird rückstandslos entfernt und die keramische Farbe 7 verbindet sich mit der Glasoberfläche und wird eingebrannt. In der Zeichnung ist das Einbrennen durch eine andere Schraffierung und eine dünnere Farbschicht angedeutet.

Figur 4 zeigt zwei Fehlerbilder, die durch eine fehlerhafte Ausrichtung des Drucks entstehen können. In Figur a) ist der Druck nicht exakt angrenzend an die metallhaltige Beschichtung angebracht, sodass eine helle Linie entlang des Drucks entsteht, die das optische Erscheinungsbild des Produktes stört. In Figur b) ist der Druck teilweise überlappend mit der metallhaltigen Beschichtung angebracht, was ebenfalls zu optischen Fehlern führt.

Im Folgenden werden die Vorteile des erfindungsgemäßen Verfahrens (Beispiel) im Vergleich mit einem herkömmlichen Verfahren (Vergleichsbeispiel) erläutert.

In beiden Fällten wurde ein 1 m × 2 m großes Glassubstrat aus klarem Floatglas mit derselben silberhaltigen Beschichtung umfassend 3 funktionelle Silberschichten hergestellt. Es wurde eine schwarze Randbedruckung in Form eines Rahmens mit verschiedenen Breiten b angebracht. Die Scheiben wurden nach der Bedruckung vorgespannt bei einer Temperatur von 690 °C für eine Dauer von 500 Sekunden. Die thermische Emissivität wurde mit einem INGLAS TIR100-2 bestimmt.

### Beispiel

| | |
|---|---|
| Glasscheibe: | 1 m x 2 m klares Floatglas |
| Metallhaltige Beschichtung: | enthält 3 Silberschichten |
| Polymere Schutzschicht: | 15 µm SGG EasyPro®; auf (Meth)acrylaten basierende Schicht |
| Emissivität des unbedruckten Bereichs (metallhaltige Beschichtung und polymere | |
| Schutzschicht; gemessen vor der Temperaturbehandlung): | 45 % |
| Emissivität des bedruckten Bereichs (gemessen nach der Temperaturbehandlung): | 89 % |

### Vergleichsbeispiel

| | |
|---|---|
| Glasscheibe: | 2 m x 1 m klares Floatglas |
| Metallhaltige Beschichtung: | enthält 3 Silberschichten |

| | |
|---|---|
| Emissivität des unbedruckten Bereichs (nur metallhaltige Beschichtung; gemessen vor der Temperaturbehandlung): | 2 % |
| Emissivität des bedruckten Bereichs (gemessen nach der Temperaturbehandlung): | 89 % |

| | Deformation in mm gemessen in 5 mm Abstand von der Kante der Glasscheibe | |
|---|---|---|
| Breite b des Rahmens in mm | Beispiel (mit polymerer Schutzschicht) | Vergleichsbeispiel (ohne polymere Schutzschicht) |
| 24 | keine | 0,10 |
| | | |
| 96 | 0,05 | 0,15 |
| | | |
| 192 | 0,10 | Glasbruch |
| | | |

Die Deformation wurde als Dickenänderung der Glasscheibe in 5 mm Abstand zur Kante gemessen. Der Vergleich zeigt, dass das erfindungsgemäße Verfahren zu wesentlich geringeren bzw. gar keinen Deformationen im bedruckten Bereich führt. Bei größeren Rahmenbedruckungen kommt es ohne die Verwendung einer Schutzschicht sogar zu einem Bruch des Glases.

### Bezugszeichenliste

- 1: Glasscheibe
- 2: Glassubstrat
- 3.1: erste Oberfläche des Glassubstrats
- 3.2: zweite Oberfläche des Glassubstrats
- 4: metallhaltige Beschichtung
- 5: polymere Schutzschicht, temporäre Schutzschicht
- 6: festgelegter Bereich, entschichteter Bereich
- 7: keramische Farbe
- 8: Laser, Laserscanner
- 12: eine Scheibenkante
- b: Breite des festgelegten Bereichs

## Patentansprüche

1. Verfahren zur Herstellung einer beschichteten und bedruckten Glasscheibe (1), mindestens umfassend die Schritte
a) Bereitstellen eines Glassubstrats (2) mit einer metallhaltigen Beschichtung (4) auf mindestens einer ersten Oberfläche (3.1) und einer auf dieser metallhaltigen Beschichtung (4) angeordneten polymeren Schutzschicht (5),
b) Entfernen der temporären polymeren Schutzschicht (5) und der metallhaltigen Beschichtung (4) nur in einem festgelegten Bereich (6),
c) Aufbringen einer keramischen Farbe (7) nur in dem festgelegten Bereich (6), wobei Schritt b) mit einem Laser (8) durchgeführt wird und die polymere Schutzschicht (5) und die metallhaltige Beschichtung (4) außerhalb des festgelegten Bereichs (6) nach Schritt c) intakt sind,
d) die Glasscheibe (1) einer Temperaturbehandlung bei >600 °C unterzogen wird, wobei die polymere Schutzschicht (5) auf der gesamten ersten Oberfläche (3.1) entfernt wird und die keramische Farbe (7) im festgelegten Bereich (6) eingebrannt wird,
wobei der festgelegte Bereich (6) sich entlang mindestens einer Kante (12) der Glasscheibe (1) erstreckt und dabei, von der Scheibenkante (12) gemessen, eine Breite b aufweist zwischen 0,5 cm und 30 cm, bevorzugt zwischen 1 cm und 20 cm.

2. Verfahren nach Anspruch 1, wobei die Glasscheibe (1) bei der Temperaturbehandlung thermisch vorgespannt wird, wobei insbesondere Einscheibensicherheitsglas oder teilvorgespanntes Glas erhalten wird.

3. Verfahren nach einem der vorhergehenden Ansprüche, wobei die keramische Farbe (7) mit einem Roll-Coater oder einem Digitaldrucker aufgebracht wird.

4. Verfahren nach einem der vorhergehenden Ansprüche, wobei vor dem Aufbringen der keramischen Farbe (7) der festgelegte Bereich (6) einer Plasmareinigung unterzogen wird.

5. Verfahren nach einem der vorhergehenden Ansprüche, wobei die Aufbringung der keramischen Farbe (7) kameragesteuert im festgelegten Bereich (6) erfolgt, wobei die Kamera einen Unterschied zwischen dem entschichteten festgelegten Bereich (6) und dem mit der polymeren Schutzschicht (5) versehenen Bereich detektiert.

6. Verfahren nach einem der vorhergehenden Ansprüche, wobei die Glasscheibe (1) zwischen 1 m² und 54 m² groß ist, bevorzugt zwischen 3 m² und 40 m², besonders bevorzugt zwischen 10 m² und 30 m² groß ist.

7. Verfahren nach einem der vorhergehenden Ansprüche, wobei die polymere Schutzschicht (5) nicht wasserlöslich ist und aus einer Zusammensetzung hergestellt wird, die Meth(acrylate) enthält.

8. Verfahren nach einem der vorhergehenden Ansprüche, wobei die metallhaltige Beschichtung (4) eine IR-reflektierende Funktion hat und mindestens zwei silberhaltige Schichten sowie mindestens drei dielektrische Schichten enthält.

9. Vorrichtung zur Durchführung des Verfahrens nach einem der Ansprüche 1 bis 8, mindestens umfassend einen Laserscanner (8) und einen Roll-Coater oder einen Laserscanner (8) und einen Digitaldrucker, und zusätzlich umfassend eine Vorrichtung zur Plasmareinigung.

## Claims

1. Method for producing a coated and printed glass pane (1), at least comprising the steps
a) providing a glass substrate (2) having a metal-containing coating (4) on at least one first surface (3.1) and a polymeric protective layer (5) arranged on this metal-containing coating (4),
b) removing the temporary polymeric protective layer (5) and the metal-containing coating (4) only in a predetermined region (6),
c) applying a ceramic ink (7) only in the predetermined region (6), wherein step b) is carried out with a laser (8) and the polymeric protective layer (5) and the metal-containing coating (4) are intact outside the predetermined region (6) after step c),
d) the glass pane (1) is subjected to a temperature treatment at >600 °C, wherein the polymeric protective layer (5) is removed on the entire first surface (3.1) and the ceramic ink (7) is fired in the predetermined region (6),
wherein the predetermined region (6) extends along at least one edge (12) of the glass pane (1) and, measured from the pane edge (12), has a width b between 0.5 cm and 30 cm, preferably between 1 cm and 20 cm.

2. Method according to claim 1, wherein the glass pane (1) is thermally toughened during the temperature treatment, wherein in particular single-pane safety glass or partially toughened glass is obtained.

3. Method according to one of the preceding claims, wherein the ceramic ink (7) is applied with a roll coater or a digital printer.

4. Method according to one of the preceding claims, wherein the predetermined region (6) is subjected to plasma cleaning before the application of the ceramic ink (7).

5. Method according to one of the preceding claims, wherein the application of the ceramic ink (7) is done in the predetermined region (6) under camera control, wherein the camera detects a difference between the de-coated predetermined region (6) and the region provided with the polymeric protective layer (5).

6. Method according to one of the preceding claims, wherein the glass pane (1) is between 1 m² and 54 m² in size, preferably between 3 m² and 40 m², particularly preferably between 10 m² and 30 m².

7. Method according to one of the preceding claims, wherein the polymeric protective layer (5) is not water-soluble and is produced from a composition that contains meth(acrylates).

8. Method according to one of the preceding claims, wherein the metal-containing coating (4) has an IR-reflecting function and contains at least two silver-containing layers as well as at least three dielectric layers.

9. Apparatus for carrying out the method according to one of claims 1 through 8, at least comprising a laser scanner (8) and a roll coater or a laser scanner (8) and a digital printer, additionally including an apparatus for plasma cleaning.

## Revendications

1. Procédé de fabrication d'une vitre (1) revêtue et imprimée, comprenant au moins les étapes suivantes
a) mise à disposition d'un substrat en verre (2) avec un revêtement contenant du métal (4) sur au moins une première surface (3.1) et une couche protectrice polymère (5) disposée sur ce revêtement contenant du métal (4),
b) enlever la couche protectrice polymère temporaire (5) et le revêtement contenant du métal (4) uniquement dans une région prédéterminée (6),
c) l'application d'une encre céramique (7) uniquement dans la région prédéterminée (6), où l'étape b) est réalisée avec un laser (8) et la couche protectrice polymère (5) et le revêtement contenant du métal (4) sont intacts à l'extérieur de la région prédéterminée (6) après l'étape c),
d) la vitre (1) est soumise à un traitement thermique à >600 °C, dans lequel la couche protectrice polymère (5) est éliminée sur toute la première surface (3.1) et l'encre céramique (7) est cuite dans la région prédéterminée (6),
dans laquelle la zone prédéterminée (6) s'étend le long d'au moins un bord (12) de la vitre (1) et, mesurée à partir du bord de la vitre (12), a une largeur b comprise entre 0,5 cm et 30 cm, de préférence entre 1 cm et 20 cm.

2. Procédé selon la revendication 1, dans lequel la vitre de verre (1) est durcie thermiquement pendant le traitement thermique, en obtenant notamment un verre de sécurité monocouche ou un verre partiellement durci.

3. Procédé selon l'une des revendications précédentes, dans lequel l'encre céramique (7) est appliquée à l'aide d'un rouleau applicateur ou d'une imprimante numérique.

4. Procédé selon l'une des revendications précédentes, dans lequel la zone prédéterminée (6) est soumise à un nettoyage au plasma avant l'application de l'encre céramique (7).

5. Procédé selon l'une des revendications précédentes, dans lequel l'application de l'encre céramique (7) est réalisée dans la région prédéterminée (6) sous le contrôle d'une caméra, la caméra détectant une différence entre la région prédéterminée (6) dévernie et la région pourvue de la couche protectrice polymère (5).

6. Procédé selon l'une des revendications précédentes, dans lequel la vitre (1) a une taille comprise entre 1 m² et 54 m², de préférence entre 3 m² et 40 m², de manière particulièrement préférée entre 10 m² et 30 m².

7. Procédé selon l'une des revendications précédentes, dans lequel la couche protectrice polymère (5) n'est pas soluble dans l'eau et est produite à partir d'une composition qui contient des méth(acrylates).

8. Procédé selon l'une des revendications précédentes, dans lequel le revêtement (4) contenant du métal a une fonction de réflexion des IR et contient au moins deux couches contenant de l'argent ainsi qu'au moins trois couches diélectriques.

9. Dispositif pour la mise en œuvre du procédé selon l'une des revendications 1 à 8, comprenant au moins un scanner laser (8) et une coucheuse à rouleau ou un scanner laser (8) et une imprimante numérique, comprenant en outre un dispositif de nettoyage au plasma.
